# EUROPÄISCHE PATENTSCHRIFT

(11) **EP 2 339 216 B1**
(45) Veröffentlichungstag und Bekanntmachung des Hinweises auf die Patenterteilung: **08.08.2012**
(21) Anmeldenummer: 09015983.1
(22) Anmeldetag: 23.12.2009
(51) Int. Cl.: F16L 5/14, F16L 3/223

(54) **Leitungsdurchführung**
Conduit bushing
Passage de ligne

(43) Veröffentlichungstag der Anmeldung: 29.06.2011
(73) Patentinhaber: LacTec GmbH, 63110 Rodgau (DE)
(72) Erfinder: Käufer, Stefan, 63329 Egelsbach (DE); Klein, Udo, 63128 Dietzenbach-Steinberg (DE)
(74) Vertreter: Tergau & Walkenhorst

(56) Entgegenhaltungen:
- WO-A1-00/02295
- DE-A1- 19 706 710
- DE-U1- 29 924 372
- GB-A- 2 171 139
- NL-C2- 1 023 687

## Beschreibung

Die Erfindung bezieht sich auf eine Leitungsdurchführung für eine Mehrzahl von Leitungen mit einem Grundkörper und einem ersten und einem zweiten Klemmkörper, der mit einer Anzahl von jeweils zur Aufnahme einer Leitung vorgesehenen Bohrungen versehen ist.

In der DE 3016611 ist eine Schlauchanschlussvorrichtung zum gemeinsamen Anschließen einer Vielzahl von Schläuchen an Anschlusskanäle eines Aggregats beschrieben, die zum Anschließen eine Metallverschraubung nutzen, die sich aus einer Hülse und einer Klemmbuchse zusammensetzt. Dabei weist die Klemmbuchse einen Anschlussstutzen zum Anschließen der Verschraubung an einem Anschlusskanal auf, wozu auf diesem ein Schneidring oder ein Klemmring und eine Überwurfmutter angeordnet sind. Eine Zugentlastung kommt dadurch zustande, dass ein Schlauchende in der Hülse zu befestigen ist, wozu die Hülse mit einem Linksgewinde auf den Schlauch aufzudrehen ist und die Klemmbuchse zum radialen Verspannen des Schlauchendes in der Hülse mittels eines Rechtsgewindes in die Hülse einzuschrauben ist, wobei sie in das offene Schlauchende eindringt und den Schlauch in radialer Richtung ausdehnt.

In der DE 10 2006 043 217 ist eine Kabel- oder Schlauchverschraubung offenbart, die einen mit einem Gehäuse verbindbaren, hohlzylinderförmigen Stutzen und ein mit dem Stutzen um eine Längsachse des Stutzens drehbar verbundenes Druckelement umfasst. Außerdem verfügt die Verschraubung über ein hohlzylinderförmiges Klemmelement und ein ringförmiges Dichtungselement, wobei das Druckelement durch Verdrehen relativ zum Stutzen auf das Klemmelement und das Dichtungselement an ein durch die Verschraubung hindurchgeführtes Kabel oder an einen durch die Verschraubung hindurchgeführten Schlauch einwirkt.

Aus der DE 43 254 420 ist eine Kabeldurchgangsvorrichtung zur Durchführung eines ummantelten Kabels durch eine Wandperforation bekannt. Diese Kabeldurchgangsvorrichtung weist einen Stutzen, ein Druckelement und ein Klemmelement auf. Bei der Montage der Kabeldurchführungsvorrichtung wird ein Kabel durch den Stutzen durchgeführt und das Druckelement durch Drehen angezogen. Dabei bewegt sich der Stutzen relativ zum Druckelement in axialer Richtung und drückt gegen das Klemmelement, sodass das Kabel in der Kabeldurchgangsvorrichtung eingeklemmt ist.

Die DE 43 19 870 beschreibt ein Verfahren zur Befestigung eines Schlauchs, der eine Zugentlastung umfasst, an einem Kupplungsstück, wobei ein Ende des Schlauchs an einem inneren Teil des Kupplungsstücks angebracht und ein äußeres Teil des Kupplungsstücks an dem inneren Teil und dem Schlauch in einer solchen Weise angebracht ist, dass ein Zwischenraum entsteht und ein Ende der Zugentlastung in diesen Zwischenraum eingeführt und ein heißer Klebstoff im flüssigen Zustand unter Druck in diesen Zwischenraum injiziert wird.

Des Weiteren ist eine Kabelverschraubung aus der DE 196 15 602 bekannt. Das Druckelement ist hier als eine Hutmutter mit einem Innengewinde ausgebildet und wird auf ein Außengewinde des Stutzens aufgeschraubt. Die Hutmutter weist an ihrer Innenseite eine schräge, konusförmige Fläche auf. Durch Aufschrauben der Hutmutter auf den Stutzen werden über die Schrägfläche das im Inneren der Verschraubung angeordnete hohlzylinderförmige Klemmelement und das im wesentlichen ringförmige Dichtungselement in Richtung der Längsachse der Verschraubung druckbeaufschlagt. Dabei werden das Klemmelement und das Dichtungselement radial nach innen gedrückt, bis sie zur Anlage an dem durch die Verschraubung geführten Kabel gelangen.

Allen bisherigen Lösungen ist gemeinsam, dass sie durch Verschraubung und/oder Verklemmung oder durch eine nicht lösbare, nicht reversible Verklebung sowohl eine Dichtigkeit als auch eine Zugentlastung bewirken, wobei die Leitung oder der Schlauch, insbesondere durch die Einwirkung von in Metall ausgeführten Gewinden oder durch die Ablösung von der Verklebungsstelle, beschädigt werden können. Diese Beschädigungen können zum einen Leckagen verursachen, zum anderen verhindern sie in den meisten der genannten Ausführungen eine Weiterverwendung der Leitung oder des Schlauchs, wenn diese beispielsweise für eine Wartung und/oder Reinigung aus der Verschraubung oder Verklemmung gelöst waren.

Des Weiteren weisen bisherige Lösungen den Nachteil auf, dass eine Mehrzahl von Schläuchen nicht fest verklemmt werden können, insbesondere, wenn diese, wie in der Praxis üblich, in einem Paket mit einer Anzahl von sechs bis acht Schläuchen am äußeren Umfang gegriffen werden. Dabei kann es vorkommen, dass die inneren, nicht direkt durch die Greifvorrichtung gegriffenen Schläuche aus dem Griff herausrutschen.

Der Erfindung liegt daher die Aufgabe zugrunde, eine Leitungsdurchführung der genannten Art anzugeben, die die beschriebenen Nachteile vermeidet und eine einfache und materialschonende sowie zuverlässige Klemmung und Zugentlastung einer Mehrzahl von Schläuchen und/oder Leitungen ermöglicht.

Diese Aufgabe wird erfindungsgemäß gelöst, indem die Bohrungen derart positioniert sind, dass der jeweils zugeordnete Kreisquerschnitt um einen Sollüberstand aus der zugeordneten Bohrung, ragt und wobei der Klemmkörper in seiner Außen- und/oder Innenkontur an den Grundkörper angepasst ist.

Vorteilhafte Ausgestaltungen der Erfindung sind Gegenstand der Unteransprüche.

Eine Leitungsdurchführung der genannten Art dient dazu, eine Mehrzahl von Schläuchen und/oder Leitungen, ein sogenanntes Schlauch- oder Leitungspaket, aufzunehmen. Dabei kann es sich beispielsweise um Schläuche handeln, die zur Durchströmung von Fluiden vorgesehen sind, oder um elektrische Leitungen. Nach dem Stand der Technik erfolgt die Aufnahme und Klemmung auch mehrerer Schläuche und/oder Leitungen bisher über den Griff einzelner Schläuche und/oder Leitungen, ist darüber hinaus aufwendig und zumindest teilweise mit Beschädigung der geklemmten Schläuche und/oder Leitungen verbunden. Die Erfindung geht von der Überlegung aus, alle Schläuche und/oder Leitungen, also das gesamte durchgeführte Schlauch- oder Leitungspaket, gemeinsam und gleichzeitig zu greifen und besonders gegen eine axiale Verschiebung zu verklemmen, ohne die Schläuche und/oder Leitungen zu beschädigen.

Um ein besonders einfaches Einbringen des Klemmkörpers in die Ausnehmung ohne Berücksichtigung der Positionierung des Klemmkörpers in Relation zum Grundkörper zu ermöglichen, um die Zuordnung eines beliebigen Schlauchs oder einer beliebigen Leitung der Leitungsdurchführung an beispielsweise eine an die Leitungsdurchführung angeordnete Lackier- oder Spritzvorrichtung zu ermöglichen und um ein Verdrehen der durch die Leitungsdurchführung gegriffenen Schläuche und/oder Leitungen bei einer axialen Drehung der Leitungsdurchführung zu vermeiden, ist die Ausnehmung vorteilhafterweise mittig im Grundkörper angeordnet. Zusätzlich oder alternativ weist die Ausnehmung des Grundkörpers in besonders vorteilhafter Ausführung einen kreisförmigen Querschnitt und eine kreisförmige Außenkontur auf.

Um eine Rotation des Grundkörpers mit den Schläuchen und/oder Leitungen und dem Klemmkörper zu ermöglichen und somit die Zuordnung eines beliebigen Schlauchs oder einer beliebigen Leitung der Leitungsdurchführung an beispielsweise eine an die Leitungsdurchführung angeordnete Lackier- oder Spritzvorrichtung zu ermöglichen, ist der Grundkörper zweckmäßigerweise drehbar gelagert.

Damit alle Schläuche und/oder Leitungen zuverlässig und gleichmäßig gegriffen werden können, wobei dieser Griff durch die Quetschung der Außenhülle des Schlauchs und/oder der Leitung durch den in den Grundkörper eingeführten oder auf diesen aufgeschobenen Klemmkörper und ein gleichzeitiger, gemeinsamer Griff durch eine einheitliche Quetschung aller gegriffenen Schläuche und/oder Leitungen erreicht wird, ist der für die Bohrungen jeweils vorgegebene Sollüber stand für alle Bohrungen gleich gewählt.

Um einen zuverlässigen Griff auf die Schläuche und/oder Leitungen zu erreichen, der nicht nur auf der äußeren Reibung zwischen dem jeweiligen Schlauch und/oder der Leitung und dem Klemmkörper basiert, sondern auch durch eine Quetschung der Außenhülle des Schlauchs und/oder der Leitung zu erzielen ist, ist ein Sollüberstand von mehr als einer vorgegebenen Spaltbreite zwischen dem Grundkörper und dem Klemmkörper vorgesehen.

Um das Einschieben des Klemmkörpers in die zylindrisch ausgestaltete Zentralausnehmung des Grundkörpers oder das Aufschieben auf den Grundkörper, insbesondere gegen den Reibungswiderstand der Schläuche und/oder Leitungen am Klemmkörper, zu erleichtern, ist dieser vorteilhafterweise konisch ausgeführt.

Um eine besonders hohe Klemmkraft der jeweiligen Leitung oder des jeweiligen Schlauchs und somit eine hohen Zugkräften widerstehende Zugentlastung zu erreichen, weist der Klemmkörper an seiner dem Grundkörper zugewandten Wandung vorteilhafterweise eine angeraute Oberfläche und/oder eine Beschichtung auf, die einen besonders hohen Reibungskoeffizienten und somit einen besonders festen Griff in Verbindung mit den zu klemmenden Schläuchen und/oder Leitungen erzielt.

Um ein Einschieben des Klemmkörpers in oder ein Aufschieben auf den Grundkörper gegen die zwischen den Schläuchen und/oder Leitungen und dem Klemmkörper entstehende Reibung zu ermöglichen, ist der Klemmkörper oder der Grundkörper vorteilhafterweise in mindestens zwei Teile unterteilt, wobei die Form der Teile in geschlossenem Zustand der des einteiligen Grund- oder Klemmkörpers entspricht.

Um die mindestens zwei Teile des Grund- oder Klemmkörpers zuverlässig, ohne Verschiebung der Teile gegeneinander, schließen und die vorgesehene Klemmung erzielen zu können, ist der Grund- oder Klemmkörper vorteilhafterweise über ein jeweils zwei Teile des Grund- oder Klemmkörpers verbindendes Scharnier klappbar.

Um eine feste Klemmung der Schläuche und/oder Leitungen und somit eine hohen Zugkräften widerstehende Zugentlastung zu erreichen, weist der aus einer Anzahl von Teilen bestehende Grund- oder Klemmkörper vorteilhafterweise jeweils an den Verbindungsstellen der Teile Verbindungselemente auf.

Die mit der Erfindung erzielten Vorteile bestehen insbesondere darin, dass Schläuche und/oder Leitungen trotz unterschiedlichen Durchmessers mit nur einem Klemmkörper an der gemeinsamen Leitungsdurchführung gegen ein Verrutschen in der Längsachse des Grundkörpers zuverlässig im Sinne einer Zugentlastung und ohne Beschädigungen der Außenwandung verklemmt werden können.

Ein Ausführungsbeispiel der Erfindung wird anhand einer Zeichnung näher erläutert. Darin zeigen:
Fig. 1 eine einteilige Leitungsdurchführung mit kreisförmigem Querschnitt in stirnseitiger Draufsicht,
Fig. 2 eine einteilige Leitungsdurchführung mit quadratischem Querschnitt in stirnseitiger Draufsicht,
Fig. 3 die Leitungsdurchführung gemäß Fig. 1 aus seitlicher Perspektive im Schnitt,
Fig. 4 eine Leitungsdurchführung in zwei Teilen mit Scharnier im Schnitt, und
Fig. 5 eine Leitungsdurchführung in zwei Teilen mit Verbindungselementen im Schnitt.
Fig. 6 die Leitungsdurchführung mit kreisförmigem Querschnitt in stirnseitiger Durchsicht mit einem außenliegenden Klemmkörper,
Fig. 7 die Leitungsdurchführung gemäß Fig. 6 mit einem zusätzlichen inneren Klemmkörper, und
Fig. 8 die Leitungsdurchführung gemäß Fig. 7 mit zusätzlichen Durchführungen im äußeren Klemmkörper.

Gleiche Teile sind in allen Figuren mit denselben Bezugszeichen versehen.

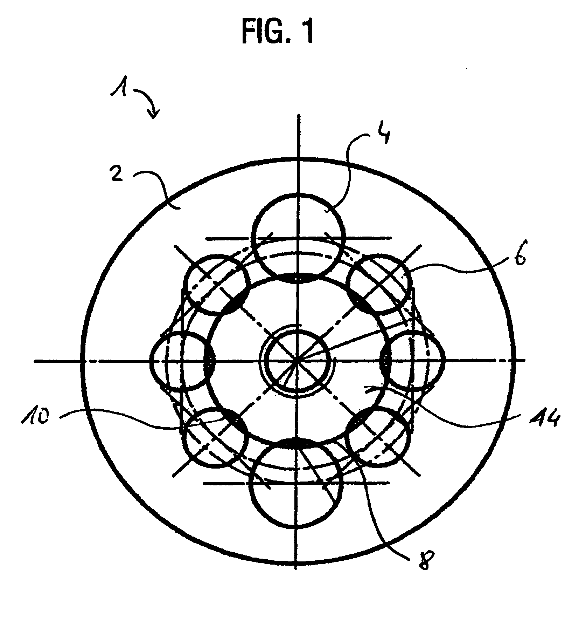

Die Leitungsdurchführung 1 in Fig. 1 umfasst einen Grundkörper 2 mit einer Anzahl von Bohrungen oder Durchführungen 4 und 6, wobei diese Durchführungen 4 und 6 unterschiedliche Durchmesser aufweisen können. Diese Durchführungen 4 und 6 sind daher zur Aufnahme von hier nicht dargestellten Schläuchen und/oder Leitungen mit ebenfalls unterschiedlichem, mit ihrem Außendurchmesser an den Durchmesser der Durchführungen 4 und 6 angepassten Abmessungen, geeignet.

Der Grundkörper 2 weist in seinem Zentralbereich in der Art eines Innenraums eine Ausnehmung 8 auf. Im Ausführungsbeispiel ist die Ausnehmung 8 mit kreisförmigen Querschnitt ausgeführt und zentral im Grundkörper angeordnet, kann aber auch dezentral angeordnet sein. Denkbar sind aber alternative Ausführungen mit quadratischem, rechteckigem oder ovalem Querschnitt oder in Form eines Vielecks. Der kreisförmige Querschnitt der Ausnehmung 8 bietet insbesondere die Möglichkeit, einen in die Ausnehmung 8 einbringbaren Klemmkörper 14 mit einer ebenfalls kreisförmigen Außenkontur mit einer zentralen Achse im Mittelpunkt des kreisförmigen Querschnitts vorzusehen und den Klemmkörper 14 um diese Achse drehbar auszuführen, so dass er in jeder Positionierung auf der zentralen Achse, anders als bei einem quadratischen, rechteckigem, ovalem oder vieleckigem Querschnitt, in die Ausnehmung 8 des Grundkörpers 2 einbringbar ist.

Die Durchführungen 4 und 6 sind derart im Grundkörper 2 angeordnet, dass sie jeweils mit einem Kreissegment, das zur Ausnehmung 8 offen ist, durch den Grundkörper 2 führen, also nicht der gesamte Durchmesser der Durchführungen 4 und 6 im Grundkörper 2 liegt. Die Schläuche und/oder Leitungen, die in die Durchführungen 4 und 6 eingeführt sind, sind daher nicht vollständig in den Grundkörper 2 eingebettet, sondern erstrecken sich mit einem Teil ihres äußeren Umfangs eine vorgegebene Strecke vom Grundkörper 2 in Ausnehmung 8 hinein.

Die Durchführungen 4 und 6 sind optional derart im Grundkörper 2 angeordnet, dass das jeweils zur Ausnehmung 8 hin offene Kreissegment die Möglichkeit aufweist, die Schläuche und/oder Leitungen aus der Ausnehmung 8 seitlich in die Durchführungen einzudrücken. Dadurch kann vermieden werden, die Schläuche und/oder Leitungen durch die Durchführungen 4 und 6 durchführen zu müssen.

In die Ausnehmung 8 ist der Klemmkörper 14 einbringbar, dessen äußere Kontur an die Kontur der Ausnehmung 2 angepasst ist. Seine Größe ist derart gewählt, dass seine äußere Kontur kleiner ist als die Innenkontur der Ausnehmung 2, und zwar nur soviel kleiner, dass die in die Ausnehmung 2 ragenden Teilabschnitte 10 der Schläuche und/oder Leitungen, in der Fig. 1 ausgefüllt dargestellt, durch das Erreichen der Endposition des Klemmkörpers 14 im Grundkörper 2 verformt und/oder gequetscht oder geklemmt sind. Diese Klemmung, die über eine Volumenverdrängung und/oder durch die Oberflächenbeschaffenheit der Schläuche und/oder Leitungen im Teilabschnitt 10 erzielbar ist, verhindert ein Verrutschen der Schläuche und/oder Leitungen aus der vorgegebenen Position in den Durchführungen 4 und 6.

Um die beabsichtigte Klemmung unabhängig von der Anordnung des Grundkörpers 2 und des Klemmkörpers 14 zueinander über eine Volumenverdrängung im Teilabschnitt 10 zu erreichen, sind die Ummantelungen oder äußeren Bereiche der Schläuche und/oder Leitungen elastisch verformbar ausgeführt. In besonders vorteilhafter Ausführung, um die Klemmung zu unterstützen, besteht die Ummantelung oder der äußere Bereich der Schläuche und/oder Leitungen aus einem rutschfesten Material oder ist mit einem solchen Material beschichtet.

Alternativ kann auch die Oberfläche des Klemmkörpers 14 aufgeraut sein oder eine Struktur aufweisen, die auch Leitungen mit einer glatten Oberfläche zuverlässig festhält.

Die Größe des Klemmkörpers 14 ist darüber hinaus derart vorgegeben, dass für die Schläuche und/oder Leitungen eine vorgegebene Mindestklemmkraft zu erreichen ist, aber keine die elastische Verformbarkeit der Schläuche und/oder Leitungen übersteigende Krafteinwirkung bei Einbringen des Klemmkörpers 14 in den Grundkörper 2 auftreten kann. Dadurch wird ein Zerstören der Schläuche und/oder Leitungen im Bereich des Teilabschnittes 10 verhindert, so dass diese nach Beendigung der Anwendung aus den Durchführungen 4 und 6 herausziehbar und für weitere Anwendungen wiederverwendbar sind.

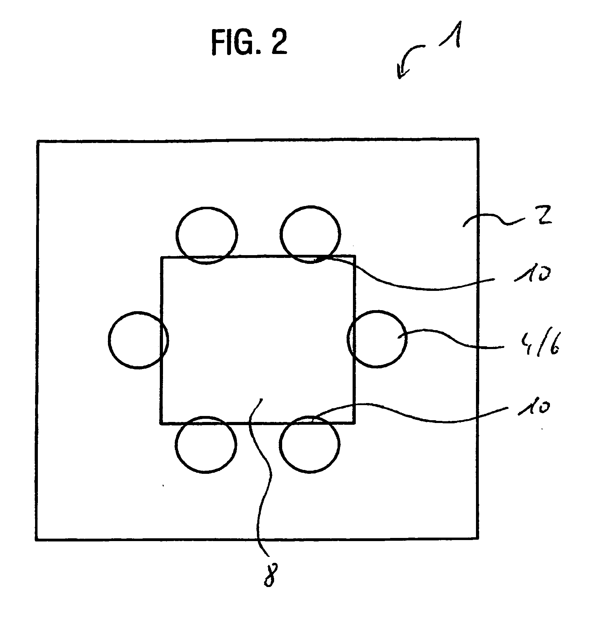

In der Fig. 2 ist der Grundkörper 2 der Leitungsdurchführung 1 in quadratischer Ausführung dargestellt. Die Ausnehmung 8 ist ebenfalls, analog zu der Außenkontur, quadratisch ausgeführt. Die Durchführungen 4 und 6 sind derart auf dem Grundkörper 2 positioniert, dass ihre jeweilige Außenwandung einen vorgegebenen Teilabschnitt 10 in die Ausnehmung 8 eindringt.

Der einzubringende Klemmkörper 14 weist ebenfalls einen quadratischen Querschnitt auf, wobei die Kantenlänge des Klemmkörpers 14 derart vorgegeben ist, dass sie kleiner ist als die Länge der Innenkanten der Ausnehmung 8. Der bei zentralem Eindringen des Klemmkörpers 14 in die Ausnehmung 8 an allen Seiten des Quadrates entstehende Spalt zwischen dem Klemmkörper 14 und der Innenwandung der Ausnehmung 8 muss dann derart vorgegeben sein, dass eine Klemmung der Schläuche und/oder Leitungen an den Teilabschnitten 10 über eine Volumenverdrängung erzielbar ist.

Der Klemmkörper 14 ist in einer besonders vorteilhaften Ausführung konisch ausgeführt, um ein Einbringen, das durch axiales Einschieben des Klemmkörpers 14 in die Ausnehmung 8 des Grundkörpers 2 erfolgt, zu erleichtern.

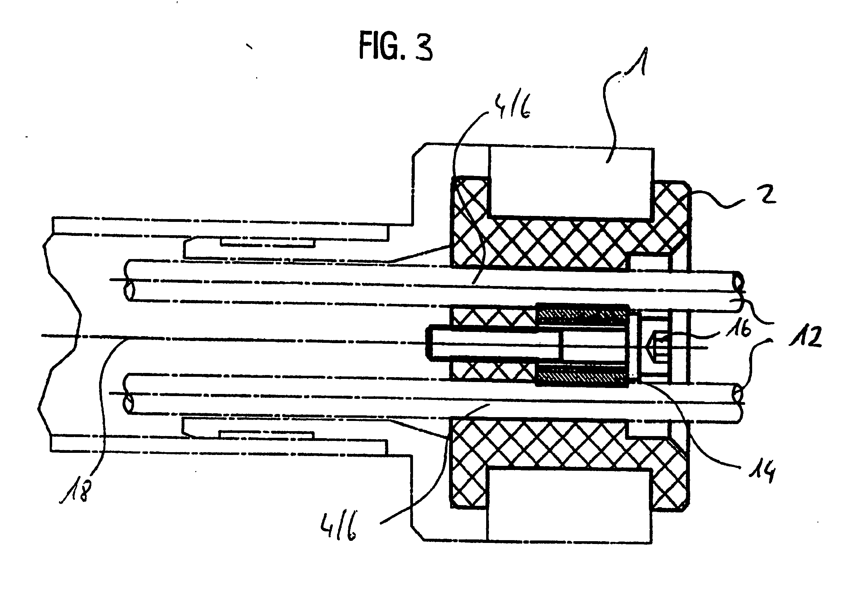

Die Fig. 3 zeigt die Leitungsdurchführung 1 in seitlicher Ansicht im Schnitt. Sie umfasst den Grundkörper 2 mit den Durchführungen 4 und 6. Durch diese Durchführungen 4 und 6 sind Schläuche und/oder Leitungen 12 geführt.

In die Ausnehmung 8 des Grundkörpers 2, hier nicht explizit dargestellt, ist ein Klemmkörper 14 eingebracht. Dieser Klemmkörper 14 verklemmt die Schläuche und/oder Leitungen an ihren in die Ausnehmung 8 ragenden Teilabschnitten 10 über eine durch die Klemmung erfolgte Volumenverdrängung derart, dass sie nicht aus ihrer vorgegebenen Position in den Durchführungen 4 und 6 herausrutschen können.

Der Klemmkörper 14 ist axial in den Grundkörper 2 einbringbar. Zur Fixierung des Klemmkörpers 14 in der Endposition ist eine Schraube 16 vorgesehen, die eine Fixierung durch Eindrehen in den Klemmkörper 14 ermöglicht und bei geeigneter Ausführung auch eine Unterstützung der Einbringung des Klemmkörpers 14 in den Grundkörper 2 gegen den Klemmwiderstand der Schläuche und/oder Leitungen 12 an der Innenwandung der Ausnehmung 8 ermöglicht. Dazu weist der Klemmkörper 14 ein der Schraube 16 zugeordnetes Innengewinde auf. Besonders bei konischer Ausführung des Klemmkörpers 14 kann die Funktion der Schraube 16 zum Erreichen der Endposition des Klemmkörpers 14 im Grundkörper 2 hilfreich sein. Dazu ist die Länge der Schraube 16 sowie das der Schraube 16 zugeordnete Innengewinde im Klemmkörper 14 geeignet auszulegen.

Weist der Grundkörper 2 einen kreisförmigen Querschnitt um eine zentrale Achse 18 sowie eine geeignete Lagerung auf, kann er drehbar ausgeführt sein. Dadurch ist eine Auswahl der Zuführung der Schläuche und/oder Leitungen 12 an beispielsweise eine an die Leitungsdurchführung 1 angeordnete, hier nicht dargestellte, Lackier- und/oder Spritzvorrichtung möglich.

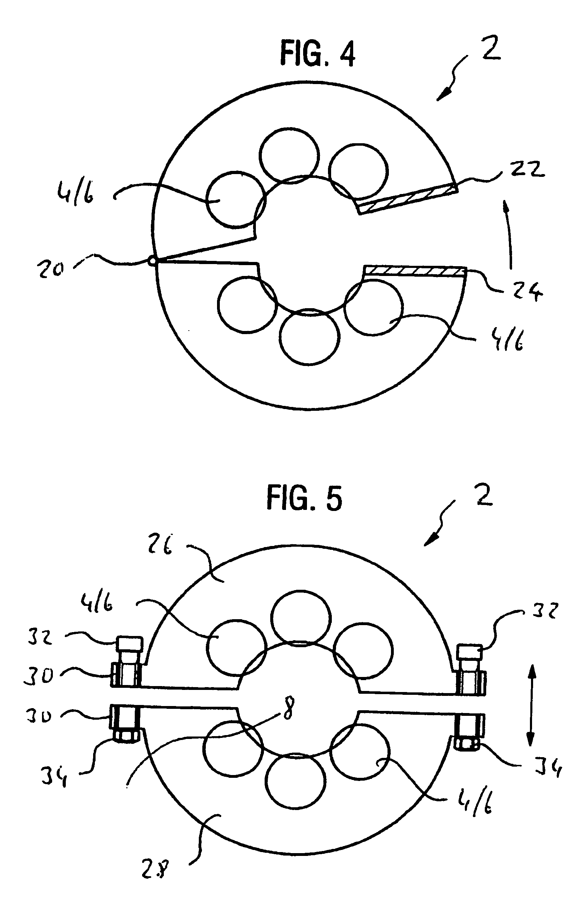

Die Fig. 4 stellt den Grundkörper 2 mit den Durchführungen 4 und 6 in einer geteilten Ausführung dar. Durch ein Scharnier 20 sind jeweils zwei Teile des Grundkörpers 2, in dieser Ausführung zweiteilig dargestellt, miteinander verbunden. An der dem Scharnier gegenüberliegenden Seite stoßen die Teile der Grundkörpers 2 in geschlossenem Zustand des Grundkörpers 2 nach Einbringen des hier nicht dargestellten Klemmkörpers 14 aneinander. Um die Teile des Grundkörpers 2 in geschlossenem Zustand zu arretieren, ist eine geeignete Haltevorrichtung vorzusehen. Diese kann beispielsweise in einer magnetischen, sich gegenseitig anziehenden Ausführung der beiden Pole 22 und 24 bestehen. Es kann aber auch eine an den Grundkörper 2 angeordnete oder in den Grundkörper 2 integrierte mechanische Haltevorrichtung vorgesehen sein. Ebenso ist eine Aufteilung des Grundkörpers 2 in mehrere Teile denkbar, wobei diese dann jeweils durch ein Scharnier miteinander verbunden sind und die einzelnen Teile des Grundkörpers 2 um die jeweils zwei Teile miteinander verbindenden Scharniere 20 klappbar sind.

Der Vorteil einer solchen mehrteiligen Ausführung liegt insbesondere darin, dass der Klemmkörper 14 nicht in die Ausnehmung 8 des Grundkörpers 2 gegen die Klemmwirkung der Schläuche und/oder Leitungen 12 an ihren jeweiligen Teilabschnitten 10 einzuführen ist, sondern im geöffneten Zustand des Grundkörpers 2 einzulegen und die notwendige Klemmwirkung nach Schließen des Grundkörpers 2 und Arretierung durch eine Anzahl von Haltevorrichtungen erzielbar ist.

Die Fig. 5 zeigt ebenfalls einen zweiteiligen Grundkörper 2. Die beiden Teile 24 und 26 des Grundkörpers 2 sind in dieser Ausführung nicht mittels eines Scharniers verbunden und um dieses klappbar, sondern werden nach Einbringen des hier nicht dargestellten Klemmkörpers 14 in die Ausnehmung 8 zusammengesetzt und durch die Führungs- und Haltevorrichtungen, die in dieser Darstellung aus Durchführungen 30 sowie die Durchführungen 30 durchdringenden Schrauben 32 sowie diesen zugeordnete Muttern 34 bestehen, in die geschlossene Position geführt und in dieser gehalten. Anstelle der hier verwendeten Schrauben 32 und Muttern 34 können auch andere geeignete Halte- oder Verschlusselemente Verwendung finden.

Auch in dieser Ausführung ist der Klemmkörper 14 in die Ausnehmung 8 des Grundkörpers 2 einlegbar, wobei die Schläuche und/oder Leitungen 12 durch die entsprechende Volumenverdrängung an ihren jeweiligen Teilabschnitten 10 durch das Zusammenführen der beiden Teile 24 und 26 des Grundkörpers 2 um den Klemmkörper 14 gegen ein Verrutschen verklemmt sind.

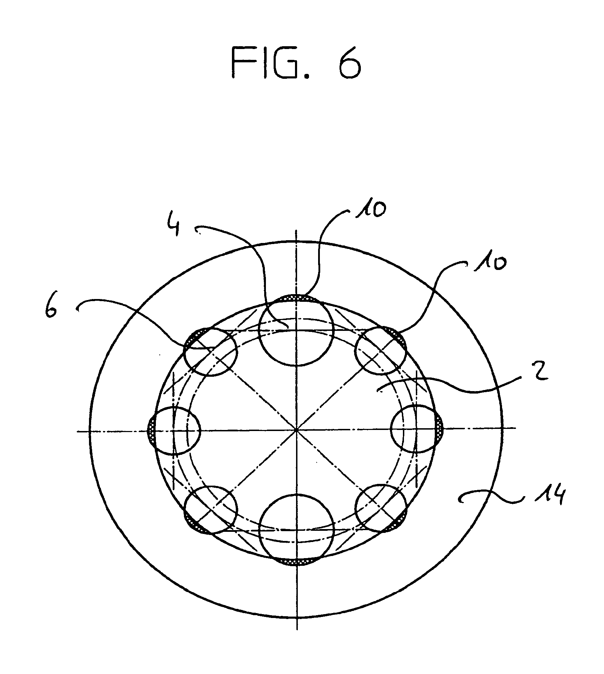

Die Fig. 6 zeigt eine zur Fig. 1 inverse Anordnung des Grundkörpers 2 und des Klemmkörpers 14 zueinander: Die Bohrungen 4 und 6 mit optional unterschiedlichen Durchmessern zur Durchführung der Schläuche und/oder Leitungen sind an der Außenkontur des Grundkörpers 2 derart angeordnet, dass sie mit einem Kreissegment, das von der Mitte des Grundkörpers 2 aus gesehen nach außen offen ist, durch den Grundkörper 2 führen. Das bedeutet, wie auch in der Fig. 1 mit innenliegenden Bohrungen erläutert, dass nicht der gesamte Durchmesser der Bohrungen 4 und 6 innerhalb des Grundkörpers liegt und somit die Schläuche und/oder Leitungen nicht mit ihrem gesamten Querschnitt in den Grundkörper 2 eingebettet sind, sondern mit einem Teil ihres äußeren Umfangs eine vorgegebene Strecke vom Grundkörper 2 aus der Außenwand herausragen.

Der Klemmkörper 14 ist in seiner Kontur an die Kontur der Außenwand des Grundkörpers 2 angepasst, wobei seine innere Kontur größer ist als die Außenkontur des Grundkörpers 2, allerdings nur so viel größer, dass die aus der Außenkontur des Grundkörpers 2 ragenden Teilabschnitte 10 der Schläuche und/oder Leitungen durch das Erreichen der Endposition des Klemmkörpers 14 um den Grundkörper 2 verformt und/oder gequetscht oder geklemmt sind. Der Klemmkörper 14 ist auf den Grundkörper 2 aufschiebbar, wobei er dazu zylindrisch oder konisch ausgeführt sein kann.

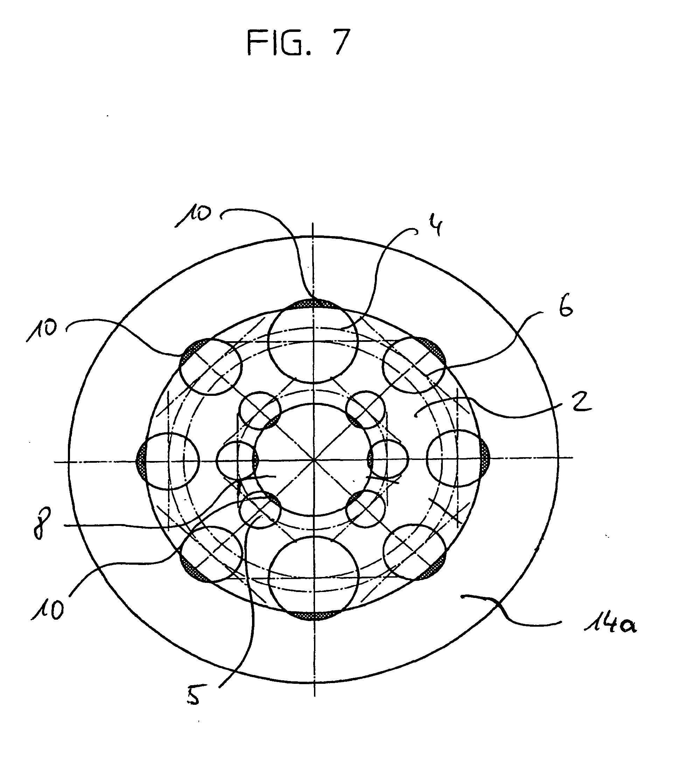

Die Fig. 7 stellt eine Ausführung mit einer Kombination der beiden bisher beispielsweise in der Fig. 1 und in der Fig. 6 aufgezeigten Anordnungen dar: Der Grundkörper 2 weist eine Ausnehmung 8 analog zu der in der Fig 1. gezeigten Ausnehmung 8. Die Bohrungen 4 und 6 sind an der Außenkontur sowie weitere Bohrungen 5 an der der Ausnehmung 8 zugewandten Innenkontur des Grundkörpers 2 angeordnet, wobei die Lage der Bohrungen der Anordnung in der Fig. 1 und der Fig. 6 derart entspricht, dass die Bohrungen nicht vollständig durch den Grundkörper 2 führen, so dass jeweils ein Teilabschnitt 10 der durch den Grundkörper 2 führenden Schläuche und/oder Leitungen außerhalb des Grundkörpers 2 zur Quetschung oder Klemmung liegt.

Auf den Grundkörper 2 ist ein Klemmkörper 14a aufschiebbar, der in seinen Spezifikationen dem in der Fig. 6 aufgezeigten Klemmkörper 14 entspricht. In die Ausnehmung 8 des Grundkörpers 2 ist ein hier nicht dargestellter Klemmkörper 14b einbringbar, dessen Ausführung der in der Fig. 1 aufgezeigten Ausführung des Klemmkörpers 14 entspricht.

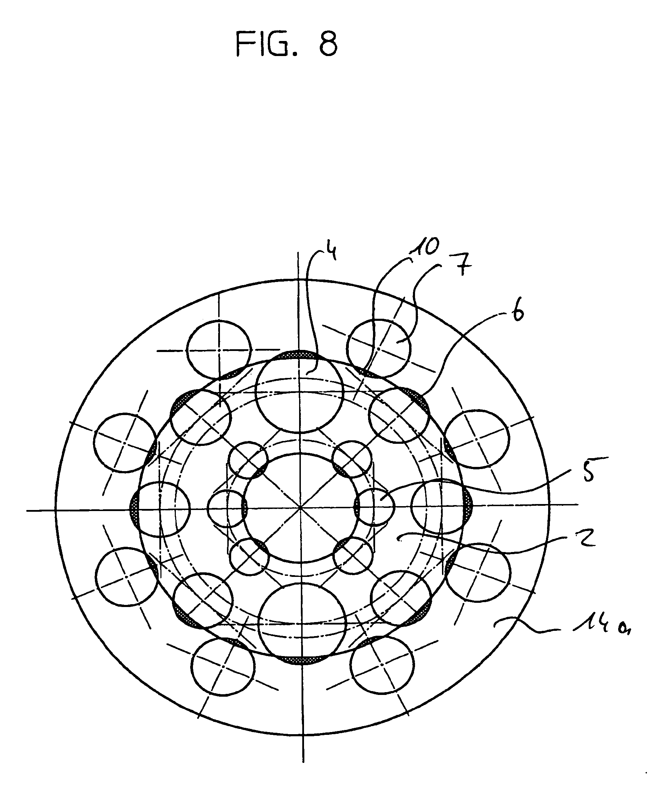

In der Fig. 8 ist eine Ausführung der Leitungsdurchführung 1 dargestellt, die eine Erweiterung der in der Fig. 7 aufgezeigten Kombination aus den beispielsweise in der Fig. 1 und in der Fig. 6 aufgezeigten Anordnungen aufzeigt:
Zusätzlich zu den Durchführungen 4, 5 und 6 im Grundkörper 2 weist der äußere Klemmring oder Klemmkörper 14a eine Anzahl Bohrungen 7 auf, die weitere Schläuche und/oder Leitungen aufnehmen können. Diese Bohrungen entsprechen in ihrer Lage im Klemmkörper 14a den in der Fig. 1 aufgezeigten an der Innenkontur des Grundkörpers 2 angeordneten Durchführungen 4 und 6, wobei der Grundkörper 2 in dieser Ausführung als Klemmkörper für die Teilabschnitte 10 der Schläuche und/oder Leitungen in den Durchführungen 7 eingesetzt ist.

Optional ist der hier nicht dargestellte Klemmkörper 14b, der in die hier zentral dargestellte Ausnehmung 8 einbringbar ist, ebenfalls mit Durchführungen für Schläuche und/oder Leitungen auszuführen, wobei in dieser Ausführung der Grundkörper 2 als den Klemmkörper 14b umgebender Klemmkörper dient.

Des Weiteren ist eine Anzahl von Erweiterungen der in der Fig. 8 dargestellten Ausführung denkbar, beispielsweise durch weitere, den Klemmkörper an seiner Außenkontur durchdringende Bohrungen sowie einen diesen umgebenden Klemmkörper, wobei auch dieser wieder Durchführungen für Schläuche und/oder Leitungen aufweisen könnte.

### Bezugszeichenliste

- 1: Leitungsdurchführung
- 2: Grundkörper
- 4, 5, 6, 7: Bohrung/Durchführung
- 8: Ausnehmung
- 10: Teilabschnitt
- 12: Schlauch/Leitung
- 14: Klemmkörper
- 14: a/b Klemmkörper
- 16: Schraube
- 18: Achse
- 20: Scharnier
- 22/24: magnetischer Pol
- 26/28: Teile des Grundkörpers
- 30: Halteelement-Durchführung des Grundkörpers
- 32: Schraube
- 34: Mutter

## Patentansprüche

1. Leitungsdurchführung für eine Mehrzahl von Leitungen mit einem Grundkörper (2) und einem zugeordneten Klemmkörper (14), dessen äußere oder innere Kontur im Wesentlichen an den Grundkörper (2) angepasst ist, wobei der Grundkörper (2) und/oder der Klemmkörper (14) eine Anzahl von jeweils zur Aufnahme einer Leitung vorgesehene Bohrungen (4, 5, 6, 7) umfasst, die derart positioniert sind, dass der jeweils zugeordnete Kreisquerschnitt der Bohrungen (4, 5, 6, 7) um einen Sollüberstand über die Kontur der Grundkörpers (8) bzw. der äußeren und/oder inneren Kontur des Klemmkörpers (14) ragt und wobei der Klemmkörper (14) und der Grundkörper (2) derart ausgelegt sind, dass beim Zusammenwirken beider der Kreisquerschnitt der Bohrungen (4, 5, 6, 7) verringert wird.

2. Leitungsdurchführung nach Anspruch 1, wobei ein dem Grundkörper zugeordneter, in seiner Kontur an diesen angepasster Klemmkörper auf den Grundkörper aufschiebbar ist.

3. Leitungsdurchführung nach Anspruch 2, wobei der Grundkörper eine Ausnehmung zur Aufnahme des Klemmkörpers aufweist.

4. Leitungsdurchführung nach Anspruch 3, bei der die Ausnehmung mittig im Grundkörper angeordnet ist.

5. Leitungsdurchführung nach einem der Ansprüche 1 bis 4, wobei der Grundkörper eine kreisförmige Außenkontur aufweist.

6. Leitungsdurchführung nach einem der Ansprüche 1 bis 5, wobei der Grundkörper drehbar gelagert ist.

7. Leitungsdurchführung nach einem der Ansprüche 1 bis 6, bei der der für die Bohrungen jeweils vorgegebene Sollüberstand für alle Bohrungen gleich gewählt ist.

8. Leitungsdurchführung nach einem der Ansprüche 1 bis 7, bei der ein Sollüberstand von mehr als einer vorgegebenen Spaltbreite zwischen dem Grundkörper und dem Klemmkörper vorgesehen ist.

9. Leitungsdurchführung nach einem der Ansprüche 1 bis 8, wobei die Außen- und/oder Innenkontur des Klemmkörpers konisch ausgeführt ist.

10. Leitungsdurchführung nach einem der Ansprüche 1 bis 9, deren Klemmkörper eine angeraute Oberfläche von mindestens Rz 200 aufweist.

11. Leitungsdurchführung nach einem der Ansprüche 1 bis 10, mit einem Klemmkörper, dessen Oberfläche zur Oberfläche der Leitungen einen Reibungskoeffizienten von mindestens µ= 0,2 aufweist.

12. Leitungsdurchführung nach einem der Ansprüche 1 bis 11, deren Grundkörper oder Klemmkörper aus mindestens zwei Teilen besteht.

13. Leitungsdurchführung nach Anspruch 12, deren Grundkörper oder Klemmkörper eine Anzahl von jeweils zwei Teile verbindenden Scharnieren aufweist.

14. Leitungsdurchführung nach Anspruch 12 oder 13, deren Grundkörper oder Klemmkörper eine Anzahl von jeweils mindestens zwei Teile verbindenden Verbindungselementen aufweist

## Claims

1. A conduit bushing for a plurality of conduits, having a base body (2) and a clamping body (14) associated thereto whose outer or inner contour substantially matches the base body (2), wherein the base body (2) and/or the clamping body (14) comprises a number of drill holes (4, 5, 6, 7), each of them provided for receiving a conduit and positioned in such a way that the respective associated circular cross-section of the drill holes (4, 5, 6, 7) goes beyond the contour (8) of the base body or of the outer and/or inner contour of the clamping body (14) by a nominal projection, and wherein the clamping body (14) and the base body (2) are designed in such a way that, when the two bodies cooperate, the circular cross-section of the drill holes (4, 5, 6, 7) is reduced.

2. The conduit bushing of claim 1, wherein a clamping body, which is associated to the base body and whose contour matches the base body, can be slipped onto the base body.

3. The conduit bushing of claim 2, wherein the base body includes a recess for receiving the clamping body.

4. The conduit bushing of claim 3, wherein the recess is arranged centrically in the base body.

5. The conduit bushing of any of claims 1 to 4, wherein the base body possesses a circular outer contour.

6. The conduit bushing of any of claims 1 to 5, wherein the base body is mounted so as to be rotatable.

7. The conduit bushing of any of claims 1 to 6, wherein the nominal projection predefined for each of the drill holes is identical for all drill holes.

8. The conduit bushing of any of claims 1 to 7, wherein a nominal projection of more than one predefined gap width between the base body and the clamping body is provided.

9. The conduit bushing of any of claims 1 to 8, wherein the outer and/or inner contour of the clamping body is conical.

10. The conduit bushing of any of claims 1 to 9, whose clamping body has a roughened surface of at least Rz 200.

11. The conduit bushing of any of claims 1 to 10, having a clamping body whose surface possesses a coefficient of friction of at least µ = 0.2 relative to the surface of the conduits.

12. The conduit bushing of any of claims 1 to 11, whose base body or clamping body consists of at least two parts.

13. The conduit bushing of claim 12, whose base body or clamping body includes a number of hinges connecting two parts each.

14. The conduit bushing of claim 12 or 13, whose base body or clamping body includes a number of connection elements connecting at least two parts each.

## Revendications

1. Passage de ligne pour une pluralité de lignes, ayant un corps de base (2) et un corps de serrage (14) y associé, dont le contour extérieur ou le contour intérieur se conforme essentiellement au corps de base (2), dans lequel le corps de base (2) et/ou le corps de serrage (14) comprend un nombre de trous (4, 5, 6, 7), chacun d'eux prévu pour recevoir une ligne et positionné de manière à ce que la section circulaire associée à chaque fois, des trous (4, 5, 6, 7) dépasse le contour (8) du corps de base ou du contour extérieur et/ou du contour intérieur du corps de serrage (14) par un dépassement de consigne, et dans lequel le corps de serrage (14) et le corps de base (2) sont étudiés de manière que, lorsque les deux corps coopèrent, la section circulaire des trous (4, 5, 6, 7) est réduite.

2. Passage de ligne selon la revendication 1, dans lequel un corps de serrage, qui est associé au corps de base et dont le contour se conforme au corps de base, peut être glissé sur le corps de base.

3. Passage de ligne selon la revendication 2, dans lequel le corps de base comprend un creux pour recevoir le corps de serrage.

4. Passage de ligne selon la revendication 3, dans lequel le creux est disposé centriquement dans le corps de base.

5. Passage de ligne selon l'une quelconque des revendications 1 à 4, dans lequel le corps de base a un contour extérieur circulaire.

6. Passage de ligne selon l'une quelconque des revendications 1 à 5, dans lequel le corps de base est monté de manière rotative.

7. Passage de ligne selon l'une quelconque des revendications 1 à 6, dans lequel le dépassement de consigne prédéfini pour chacun des trous est identique pour tous les trous.

8. Passage de ligne selon l'une quelconque des revendications 1 à 7, dans lequel un dépassement de consigne de plus d'une largeur d'écartement prédéfinie entre le corps de base et le corps de serrage est prévue.

9. Passage de ligne selon l'une quelconque des revendications 1 à 8, dans lequel le contour extérieur et/ou le contour intérieur du corps de serrage est conique.

10. Passage de ligne selon l'une quelconque des revendications 1 à 9, dont le corps de serrage a une surface rendue rugueuse d'au moins Rz 200.

11. Passage de ligne selon l'une quelconque des revendications 1 à 10, ayant un corps de serrage dont la surface a un coefficient de friction d'au moins p = 0,2 relatif à la surface des lignes.

12. Passage de ligne selon l'une quelconque des revendications 1 à 11, dont le corps de base ou le corps de serrage consiste en au moins deux parties.

13. Passage de ligne selon la revendication 12, dont le corps de base ou le corps de serrage comprend un nombre de charnières qui relient deux parties à chaque fois.

14. Passage de ligne selon la revendication 12 ou 13, dont le corps de base ou le corps de serrage comprend un nombre d'éléments de connexion qui relient deux parties à chaque fois.
